(19) Europäisches Patentamt
European Patent Office
Office européen des brevets

(11) **EP 2 535 701 A2**

(12) **EUROPEAN PATENT APPLICATION**

(43) Date of publication:
**19.12.2012 Bulletin 2012/51**

(51) Int Cl.:
***G01N 21/64*** *(2006.01)*

(21) Application number: **12172264.9**

(22) Date of filing: **15.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.06.2011 JP 2011134961**

(71) Applicant: **Fujifilm Corporation Minato-ku Tokyo (JP)**

(72) Inventor: **OHTSUKA, Hisashi Kanagawa-ken (JP)**

(74) Representative: **Klunker . Schmitt-Nilson . Hirsch Patentanwälte Destouchesstrasse 68 80796 München (DE)**

(54) **Fluorescence detecting apparatus, sample cell for detecting fluorescence, and fluorescence detecting method**

(57)     To enable highly sensitive fluorescence detection at low cost by using a simple optical system in a fluorescence detecting device.
[Constitution]
Excitation light ($L_0$) from a light source (32) is caused to enter a finely apertured thin metal film (12), having fine apertures (12a) with diameters less than or equal to the wavelength of the excitation light ($L_0$), formed on a surface of a substrate (11) different from a light incident surface thereof, through the substrate (11), to cause near field light to be generated at the fine apertures (12a). Fluorescent labels included in a sample liquid S supplied to contact the thin metal film (12) are caused to emit light by the near field light and by surface plasmon which are induced in the finely apertured thin metal film (12) by the near field light. Fluorescence ($L_f$) emitted by the fluorescent labels is detected with a detector (30). Fluorescent particles (F) having a plurality of fluorescent pigments (15) enveloped in a transmitting material (16) that transmits both the excitation light (Lo) and the fluorescence ($L_f$) are employed as the fluorescent labels.

FIG.1

**Description**

BACKGROUND OF THE INVENTION

Field of the Invention

The present invention is related to a fluorescence detecting apparatus for detecting detection target substances within samples by fluorometry, a sample cell for detecting fluorescence, and a fluorescence detecting method. More particularly, the present invention is related to fluorescence detection that utilizes near field light.

Description of the Related Art

Fluorometry is conventionally used in biological measurements and the like, as an easy and highly sensitive measuring method. In fluorometry, a sample, which is considered to contain a detection target substance that emits fluorescence when excited by light having a specific wavelength, is irradiated with an excitation light beam of the aforementioned specific wavelength. The presence of the detection target substance can be confirmed quantitatively by detecting the fluorescence due to the excitation. In the case that the detection target substance is not a fluorescent substance, a substance which is labeled with a fluorescent substance and specifically binds with the detection target substance is caused to contact the sample. Thereafter, fluorescence is detected in the same manner as described above, thereby confirming the presence of the detection target substance, by the presence of the bonds.

An evanescent fluorometry method that causes excitation light which is totally reflected at a first surface of a substrate to enter the substrate from a second surface thereof, excites fluorescence with evanescent waves that seep onto the first surface, and detects the fluorescence excited by the evanescent waves is known as a method for detecting fluorescence emitted by fluorescent labels.

Further, an evanescent fluorometry method that utilizes the effects of electric field enhancement by plasmon resonance in order to improve sensitivity is proposed in U.S. Patent No. 6,194,223. The surface plasmon enhanced fluorometry method causes plasmon resonance to occur. Therefore, a metal layer is provided on a first surface of a substrate, excitation light is caused to enter the interface between the substrate and the metal layer from a second surface of the substrate at a total reflection angle or greater. Surface plasmon are generated in the metal layer by irradiation of the excitation light and fluorescent signals are amplified by the electric field enhancing effects thereof, thereby improving S/N ratios.

Japanese Unexamined Patent Publication No. 2010-019088 discloses the use of fluorescent particles in which a plurality of fluorescent pigments are enveloped in a material that transmits fluorescence as labels, in order to further increase fluorescent signals. By employing such fluorescent particles as labels, the amount of fluorescence can be greatly increased compared to cases in which single fluorescent pigment molecules are employed, thereby improving S/N ratios.

Such surface plasmon enhanced fluorescence sensors can detect substances in amounts as small as several fmol (femto mol), and are capable of satisfying requirements with respect to increased sensitivity. On the other hand, total reflecting optical systems such as prisms are necessary, resulting in apparatuses becoming complex and costs becoming greater.

Meanwhile, Japanese Unexamined Patent Publication No. 2008-051512 proposes a sensor that enables fluorescence measurement by generating near field light using a simple optical system that does not utilize a prism optical system, but rather a finely.apertured thin film having fine apertures with diameters of approximately 200nm. A sensor that improves S/N ratios in this type of sensor is proposed in U.S. Patent Application Publication No. 20090101836.

The invention of U.S. Patent Application Publication No. 20090101836 causes surface plasmon resonance to be generated in a thin metal film by near field light, by forming a finely apertured thin film having fine apertures from metal. Fluorescence which is amplified by the electric field enhancing effect of surface plasmon resonance is generated, in order to improve S/N ratios. In addition, U.S. Patent Application Publication No. 20090101836 proposes a configuration in which a non flexible film formed by a polymer or $SiO_2$ is provided on a finely apertured thin film formed by metal. The non flexible film is provided to prevent fluorescent pigment from approaching too close to the metal, to suppress a phenomenon in which energy excited within fluorescent pigment transitions to the metal film before fluorescence is generated, thereby precluding fluorescence generation (so called metal quenching).

However, it is troublesome to form the non flexible film on the metal film. In addition, differences in the coefficients of thermal expansion of the non flexible film and the substrate on which the thin metal film is formed is great, causing the non flexible to be likely to crack, etc., resulting in poor durability. Therefore, it had been difficult to implement the invention of U.S. Patent Application Publication No. 20090101836 in practical use.

SUMMARY OF THE INVENTION

The present invention has been developed in view of the foregoing circumstances. It is an object of the present invention to provide a fluorescence detecting apparatus which is easy to produce, has high durability, and can be implemented in practical use.

It is another object of the present invention to provide a sample cell for fluorescence detection for use in fluorescence detecting apparatuses. It is still another object of the present invention to provide a fluorescence detecting method having high practical utility.

A fluorescence detecting apparatus of the present invention comprises:

a light source for emitting excitation light;
a sample cell equipped with a substrate arranged at a position onto which the excitation light is irradiated and formed by a material that transmits the excitation light that enters through a light incident surface, a finely apertured thin metal film formed on a surface of the substrate other than the light incident surface and having fine apertures with diameters less than or equal to the wavelength of the excitation light, and a sample holding portion for holding a sample liquid that includes fluorescent labels such that the sample liquid contacts the finely apertured thin metal film; and
a photodetector for detecting fluorescence emitted by the fluorescent labels, which are excited by near field light generated at the fine apertures when the excitation light passes through the substrate from the incident surface and enters the finely apertured metal film and also excited by surface plasmon resonance induced on the finely apertured thin metal film by the near field light; and is characterized by:
the fluorescent labels being fluorescent particles having fluorescent pigment molecules which are enveloped in a light transmitting material that transmits both the excitation light and the fluorescence.

It is preferable for the particle size φ of the fluorescent particles to be less than or equal to 200nm. It is also preferable for the particle size φ of the fluorescent particles to be 20nm or greater, and more preferably 50nm or greater.

Note that the "fine apertures" which are formed in the finely apertured thin metal film of the present invention are apertures having diameters less than or equal to the wavelength of the excitation light to be employed, thereby causing near field light to be generated when the excitation light is irradiated thereon. The shape of the apertures may be circular, elliptical, or polygonal. The "diameter" of the fine apertures refers to the diameter of a circle having an area equal to the area of the aperture.

The particle size φ of the fluorescent particles is the diameter of a fluorescent particle in the case that the fluorescent particles are substantially spherical. In the case that the fluorescent particles are not spherical, the particle size φ of the fluorescent particles is defined as an average length of the maximum width and the minimum width thereof.

The fluorescent particles are those in which a plurality of fluorescent pigment molecules are present within a light transmissive dielectric material. However, a portion of the plurality of fluorescent pigment molecules may be exposed to the exterior of the light transmissive dielectric material. In addition, the distribution of the fluorescent pigment molecules within the light transmissive dielectric material is not particularly limited, and the distribution maybe uniform or non uniform. Further, regions at which fluorescent pigment molecules are not present may exist in the central portions of the fluorescent particles.

A sample cell for detecting fluorescence of the present invention is to be employed in the fluorescence detecting apparatus of the present invention, characterized by:

the substrate and the sample holding portion constituting a flow channel through which the sample liquid flows;
a sensor portion, at which a first binding substance that specifically binds with a detection target substance is immobilized, being provided on the finely apertured thin metal film;
a labeling binding substance adding portion, at which one of a second binding substance that specifically binds with the detection target substance and is labeled with fluorescent labels and a third binding substance that specifically binds with the first binding substance in competition with the detection target substance and is labeled with fluorescent labels are added, being provided in the flow channel upstream of the sensor portion; and
the fluorescent labels being fluorescent particles having fluorescent pigment molecules which are enveloped in a light transmitting material that transmits both the excitation light and the fluorescence.

Note that the sample cell of the present invention is favorable for use in assays according to the sandwich method in the case that the second binding substance labeled with fluorescent labels is added as the labeling binding substance, and favorable for use in assays according to the competition method in the case that the third binding substance labeled with fluorescent labels is added as the labeling binding substance.

A fluorescence detecting method of the present invention comprises the steps of:

employing a sample cell equipped with a substrate, a finely apertured thin metal film having fine apertures formed on a surface of the substrate, and a sample holding portion for holding a sample liquid that includes fluorescent labels such that the sample liquid contacts the finely apertured thin metal film;
causing a sample liquid that includes labeled binding substance labeled with fluorescent labels to contact the finely apertured thin metal film of the sample cell;
causing excitation light having a wavelength greater than the diameter of the fine apertures to enter an incident surface of the substrate other than the surface on which the finely apertured thin metal film is formed; and
detecting fluorescence emitted by the fluorescent labels, which are excited by near field light generated at the fine apertures when the excitation light passes through the substrate from the incident surface and enters the finely apertured metal film and also excited by surface plasmon resonance induced on the finely apertured thin metal film by the near field light; and is characterized by:

the fluorescent labels being fluorescent particles having fluorescent pigment molecules which are enveloped in a light transmitting material that transmits both the excitation light and the fluorescence.

The fluorescence detecting apparatus and the fluorescence detecting method of the present invention employ the finely apertured thin metal film. Therefore, it is possible to generate near field light at the side of the fine apertures on the side opposite the substrate if excitation light is irradiated toward the finely apertured thin metal film through the substrate, without utilizing a prism optical system. Accordingly, the optical system can be simplified compared to conventional surface plasmon resonance type fluorescence measuring apparatuses that required total reflection optical systems.

In addition, not only is the intensity of the fluorescence amplified by the near field light generated as described above and surface plasmon induced in the finely apertured thin metal film, but the fluorescent particles having a plurality of fluorescent pigment particles enveloped in the light transmissive dielectric material that transmits both excitation light and fluorescence are employed as fluorescent labels. Therefore, the amount of fluorescence can be significantly increased compared to cases in which single fluorescent pigment molecules are employed as labels.

The fluorescence detecting method and the fluorescence detecting method of the present invention employs the fluorescent particles having a plurality of fluorescent pigment particles enveloped in the light transmissive dielectric material that transmits both excitation light and fluorescence. Therefore, the metal and the fluorescent pigment molecules can be separated to a degree even if the film for preventing metal quenching is not provided on the metal film. The fluorescent pigment molecules are enveloped in the fluorescent particles to enable metal quenching that occurs when fluorescent pigment molecules become too close to metal to be suppressed. Therefore, the trouble of forming a non flexible film formed by polymers or $SiO_2$ as disclosed in U.S. Patent Application Publication No. 20090101836 is obviated. Metal quenching can be effectively eliminated by an extremely simple method and fluorescent signals can be detected stably, resulting in high practical utility.

BRIEF DESCRIPTION OF THE DRAWINGS

Figure 1 is a schematic diagram that illustrates a fluorescence detecting apparatus according to a first embodiment of the present invention.

Figure 2A is a diagram that schematically illustrates a photoelectric field in the vicinity of a fine aperture. Figure 2B is a simulation diagram that illustrates a distribution of a photoelectric field intensity $|Ex|^2$ within a fine aperture.

Figure 2C is a diagram for explaining the relationship between a finely apertured thin metal film and fluorescent particles.

Figure 3 is a partial sectional diagram that schematically illustrates a fluorescence detecting apparatus according to a second embodiment of the present invention.

Figure 4A is a plan view that illustrates a sample cell provided in the fluorescence detecting apparatus of Figure 3.

Figure 4B is a side sectional view of the sample cell of Figure 4A.

Figure 5 is a collection of diagrams that illustrates the steps of an assay performed by the fluorescence detecting apparatus according to the second embodiment of the present invention.

DESCRIPTION OF THE PREFERRED EMBODIMENTS

Hereinafter, embodiments of the present invention will be described with reference to the attached drawings.

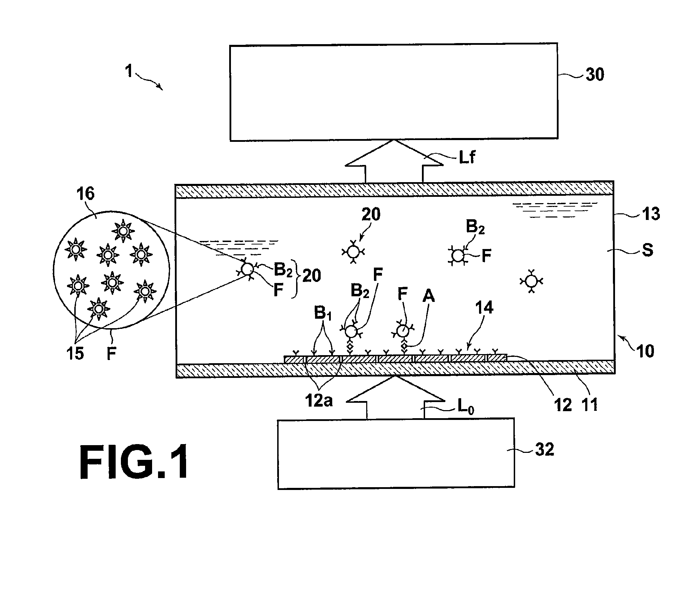

Figure 1 is a schematic side view of a fluorescence detecting apparatus 1 according to a first embodiment of the present invention. The fluorescence detecting apparatus 1 is employed to detect antigens A as a detection target substance from a sample liquid S that contains the antigens A, utilizing antigen/antibody reactions. As illustrated in Figure 1, the fluorescence detecting apparatus 1 is equipped with: a light source 32 that emits an excitation light beam $L_0$ of a predetermined wavelength; sample cell 10 constituted by a planar substrate 11 formed by a material that transmits the excitation light beam $L_0$, provided to cause the excitation light beam $L_0$ to propagate therethrough from a first surface (light incident surface) thereof, a finely apertured thin metal film 12 having fine apertures 12a with diameters less than or equal to the wavelength of the excitation light beam $L_0$, provided on a second surface of the substrate 11, and a sample holding portion 13 that holds the sample liquid S such that the sample liquid S contacts the finely apertured thin metal film 12; and a photodetector 30 which is provided at a position outside the sample holding portion 13 and at which fluorescence $L_f$ of fluorescent labels within the sample liquid S can be detected. Here, the fluorescent labels are fluorescent particles F, in which a plurality of fluorescent pigment molecules 15 are enveloped in a light transmissive dielectric material 16 that transmits both the excitation light $L_0$ and the fluorescence $L_f$.

A sensor portion 14, at which primary antibodies $B_1$ are immobilized as a first binding substance that specifically binds with the antigens A, which are the detection target substance, is immobilized, is provided on the finely apertured thin metal film 12.

In addition, the sample liquid S includes the fluorescent particles F as fluorescent labels, and a labeling binding substance 20, which are secondary antibodies $B_2$ that have specific binding properties with the antigens A and are labeled with the fluorescent particles F.

The primary antibodies $B_1$ are not particularly limited, and may be appropriately selected according to detection conditions (particularly the detection target substance). For example, in the case that the antigens A are CRP antigens (molecular weight: 110,000 Da), monoclonal antibodies that specifically bind with the antigens A may be employed as the primary antibodies 3. The primary antibodies 3 may be immobilized onto the non flexible film 25, which is formed by a polymer material, by the amine coupling method via PEG's having carboxylized ends. Thereby, antigen/antibody reactions can be employed to specifically bind the antigens A to the detection section. The amine coupling method comprises the following three steps, for example. Note that the following example is for a case in which a 30μl cuvette/cell is employed.

(1) Activation of -COOH Groups at the Ends of Linkers

30μl of a solution containing equal volumes of a 0.1M NHS (N-hydrooxysuccinimide) solution and a 0.4M EDC (1-ethyl-3-(3-dimethylamminopropyl) carbodiimide) solution are added, and left still at room temperature for 30 minutes.

(2) Immobilization of Primary Antibodies

Cleansing is performed five times with a PBS buffer (pH: 7.4). Then, 30μl of a solution containing the primary antibodies (500μg/ml) is added, and left still for 30 to 60 minutes at room temperature.

(3) Blocking of Non Reacted -COOH Groups

Cleansing is performed five times with a PBS buffer (pH: 7.4). Then, 30μl of a 1M ethanol amine solution (pH: 8.5) is added, and left still for 20 minutes at room temperature. Thereafter, cleansing is performed five times with a PBS buffer (pH: 7.4).

The excitation light beam $L_0$ is not particularly limited, and may be a single wavelength light beam emitted from a laser light source or the like, or a broad spectrum light beam emitted from a white light source. The type of light beam to be employed as the excitation light beam $L_0$ may be appropriately selected according to detection conditions.

The light source 32 is not particularly limited, and may be a laser light source. The type of light source to be employed as the light source 32 may be appropriately selected according to detection conditions. The light source 32 may be combined with moving means for emitting the excitation light beam $L_0$ through the substrate 11 toward the finely apertured thin metal film 12 from a desired direction, as necessary. In addition, the light source 32 may be combined with a light guiding optical system constituted by mirrors, lenses, and the like, to guide the excitation light beam $L_0$, as appropriate.

The substrate 11 may be formed by any material that transmits at least the excitation light beam $L_0$. Examples of such materials are transparent resins and glass. It is desirable for the substrate 11 to be formed by resin. In the case that the substrate 11 is formed by resin, polymethyl methacrylate (PMMA), polycarbonate (PC), and non crystalline polyolefin (APO) that includes cyclooolefin may be favorably employed.

The material of the finely apertured thin metal film 12 is not particularly limited, and may be selected appropriately according to detection conditions as long it is a metal in which surface plasmon resonance can be induced by near field light. It is desirable for Au, Ag, Pt, and the like to be employed, from the viewpoint of generation conditions for surface plasmon. The film thickness of the finely apertured thin metal film 12 is also not particularly limited, and may be selected appropriately according to detection conditions. However, it is desirable for the film thickness to be within a range from 20nm to 60nm, from the viewpoint of generation conditions for surface plasmon. The method for producing the finely apertured thin metal film 12 is not particularly limited, and may be selected appropriately according to detection conditions and materials to be utilized. It is desirable for the methods for producing finely apertured thin metal films disclosed in Japanese Unexamined Patent Publication No. 2008-051512 and U.S. Patent Application Publication No. 20090101836, for example.

It is desirable for the diameters of the fine apertures 12a to be within a range from 5nm to 200nm.

From the viewpoint of increasing the intensity of fluorescence, it is desirable for the percentage of open areas of the finely apertured thin metal film 12 to be large to a degree. However, if the percentage of open areas of the finely apertured thin metal film 12 exceeds 50%, it becomes difficult to realize both stable production of a thin film having favorable close contact properties and stable production of fine apertures having favorable uniformity. Therefore, it is desirable for the upper limit of the percentage of open areas of the finely apertured thin metal film to be 50%.

Note that specific examples of the light transmissive dielectric material 16 of the fluorescent particles F (fluorescent labels) include dielectrics such as polystyrene and $SiO_2$ However, the light transmissive dielectric material 16 is not particularly limited as long as it is capable of enveloping the fluorescent pigment molecules 15, can output fluorescence emitted by the fluorescent pigment molecules 15 toward the exterior, and can transmit excitation light to excite the fluorescent pigment molecules 15.

When fluorescent pigment molecules become too close to metal, quenching occurs due to energy transition to the metal. The degree of metal quenching is inversely proportionate to the distance between the molecules and the metal to the third power in the case that the metal is a plane which is infinitely thick. The degree of metal quenching is inversely proportionate to the distance between the molecules and the metal to the fourth power in the case that the metal is a plane which is infinitely thin. The degree of metal quenching is inversely proportionate to the distance between the molecules and the metal to the sixth power in the case that the metal is in the form of fine particles. Accordingly, it is desirable for a distance of several nm or greater, preferably 10nm or greater, to be secured between the thin metal film 12 and the fluorescent pigment molecules 15.

Meanwhile, the fluorescent pigment molecules 15 are excited by an electric field which is enhanced by surface plasmon. The electric field enhancing effect of surface plasmon is effective for only approximately the wavelength $\lambda$ of the excitation light beam, and it is known that the electric field intensity attenuates exponentially according to the distance from the surface of the metal film. It is desirable for the distance between the surface of the metal film and the fluorescent pigment molecules to be less than 100nm, in order to enable fluorescence to be excited effectively.

If the fluorescent particles F of the present embodiment are employed, a state in which a plurality of fluorescent pigment molecules 15 are present at a distance within a range from 10nm to 100nm from the thin metal film 12 can be easily achieved, because the plurality of fluorescent pigment molecules 15 are enveloped within the fluorescent particles F. For this reason, it is not necessary to form a film on the thin metal film to prevent metal quenching. Therefore, the trouble of forming such a film is obviated, and there is no possibility of defects occurring in the sample cell due to cracking of such a film.

The fluorescent particles F of the present embodiment have the plurality of fluorescent pigment molecules 15 enveloped therein. Therefore, the amount of excited fluorescence can be significantly increased compared to cases in which single fluorescent pigment molecules 15 are employed as labels.

The photodetector 30 quantitatively detects fluorescence of a specific wavelength emitted by the fluorescent particles F. LAS-1000 plus by FUJIFILM Corporation may be favorably employed as the photodetector 30. However, the photodetector 30 is not limited to the above, and may be selected appropriately according to detection conditions. Examples of alternative photodetectors include: CCD's; PD's (photodiodes) ; photoelectron multipliers; and c-MOS's.

Hereinafter, a fluorescence detecting method that employs the above fluorescent detecting apparatus will be described.

Primary antibodies $B_1$ that specifically bind with the antigens A are immobilized on the thin metal film 12. The sample liquid S is injected into the sample holding portion 13. The antigens A within the sample liquid bind to the primary antibodies $B_1$ and are immobilized. Next, the labeling binding substance 20 constituted by the secondary antibodies B2 that bind specifically bind with the antigens A and have at least different epitopes from those of the primary antibodies $B_1$ is caused to flow into the sample holding portion 13. The labeling binding substance 20 binds to the antigens A which are immobilized on the primary antibodies $B_1$, to form sandwiches.

Note that at this time, the sample liquid and the labeling binding substance 20 may be injected into the sample cell after being mixed outside the sample cell. In this case, the antigens A and the secondary antibodies $B_2$ are injected into the sample cell in a state in which they are bound in advance, and sandwiches are formed by the antigens A, which are already bound to the secondary antibodies $B_2$, binding to the primary antibodies $B_1$ within the sample cell.

Thereafter, the light source 32 emits the excitation light beam $L_0$, and the excitation light beam $L_0$ is irradiated onto the finely apertured thin metal film 12 in a direction perpendicular thereto via the substrate 11. Near field light seeps out into the fine apertures 12a of the finely apertured thin metal film 12 by the irradiation of the excitation light beam $L_0$. The near field light excites the fluorescent particles F which are fixed to the sensor portion 14 via the secondary antibodies $B_2$. Further, plasmon are generated at the surface of the finely apertured thin metal film 12 at the vicinities of the fine apertures 12a by being induced by the near field light. Therefore, the electric field in the peripheries thereof is enhanced by the electric field enhancing effect of the plasmon. The fluorescent particles F are further excited by the enhanced electric field. The excited fluorescent particles F emit fluorescence of a predetermined wavelength, and the antigens A are detected by detecting this fluorescence.

As described above, the fluorescence detecting apparatus 1 of the present invention utilizes the finely apertured thin metal film 12. The near field light generated in the fine apertures 12a induces plasmon on the surface of the finely apertured thin metal film 12. It becomes possible to amplify the intensity of fluorescence emitted by the fluorescent particles F by the electric field enhancing effect of the plasmon. The intensity of fluorescence which is amplified by the electric field enhancing effect is amplified by approximately two orders of magnitude compared to a case in which a finely apertured thin film not formed by metal is utilized, that is, a case in which only near field light is utilized.

Further, light which is scattered by impurities or the like in the substrate 11 (normal propagated light) cannot pass through the fine apertures 12a of the finely apertured thin metal film 12. Therefore, the scattered light is shielded by the finely apertured thin metal film 12, and cannot reach the photodetector 30. For these reasons, the fluorescence detecting apparatus 1 of the present invention can significantly amplify the intensity of fluorescence while substantially eliminating optical noise. Thereby, fluorescence detection at extremely high sensitivity can be realized.

In addition, it is not necessary to totally reflect the excitation light beam $L_0$, unlike in cases in which surface plasmon are generated in a conventional metal film that does not have apertures therein. Therefore, a total reflection optical system is unnecessary, the optical system becomes simple, and the fluorescence detecting apparatus can be provided at low cost.

The fluorescent particles F having a plurality of fluorescent pigment particles 15 enveloped in the light transmissive dielectric material 16 that transmits both excitation light and fluorescence are employed as fluorescent labels. Therefore, fluorescence from a plurality of fluorescent pigment molecules 15 is emitted from each fluorescent particle F. Accordingly, the amount of fluorescence can be significantly increased compared to cases in which single fluorescent pigment molecules are employed as labels.

Note that the irradiation direction of the excitation light beam $L_0$ was set perpendicular with respect to the finely apertured thin metal film 12 in the above embodiment. However, the irradiation direction is not limited to the perpendicular direction. The fluorescence detecting apparatus of the present invention employs the finely apertured thin metal film. Therefore, near field light can be generated in the fine apertures 12a regardless of the irradiation direction, as long as the excitation light beam is irradiated onto the finely apertured thin metal film 12 through the substrate 11. In addition, the above embodiment was described as a case in which antigen/antibody reactions were employed. However, the present invention is not limited to use with antigen/antibody reactions, and use with other reactions that utilize specific binding properties can also achieve the objectives of the present invention.

Meanwhile, it became clear through further investigation by the present inventors that non specific adsorption of fluorescent particles in the vicinity of the fine apertures of the finely apertured thin metal film occurs, resulting in increased noise and deteriorated S/N ratios.

Therefore, the correlation between the sizes of fluorescent particles and the frequency of non specific adsorption was investigated using a fluorescence microscope. From the investigation, it was found that use of particles having sizes of approximately 1$\mu$m resulted in non specific adsorption occurring at almost all of the apertures. However, the amount of adsorbed particles greatly decreased accompanying decreases in the size thereof. It was found that at a particle size less than or equal to the wavelength of the excitation light beam (approximately 500nm) resulted in an ignorable level of non specific adsorption. Further, it was found that non specific adsorption at the apertures was eliminated at particle sizes less than the aperture sizes.

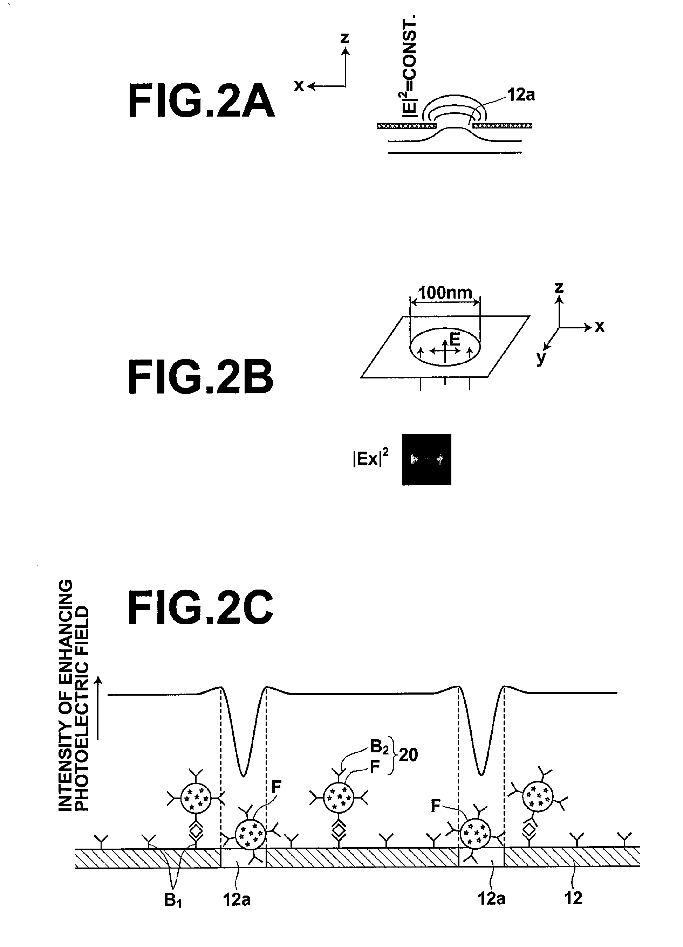

Figure 2A is a diagram that schematically illustrates a photoelectric field generated by evanescent light in an xz plane in the vicinity of a fine aperture. In Figure 2A, the photoelectric field is represented by $|E|^2$=constant lines (contour lines). Here, the excitation light beam is that which is polarized in the x direction. As illustrated in Figure 2A, it can be seen that the photoelectric field seeps out from the aperture. The distribution (simulation) of x direction components ($|E|^2$) of the intensity of the photoelectric field formed by the evanescent light that seeps out of the fine apertures in the close vicinity (z=5nm) of the surface in which the aperture is formed in the case that the aperture diameter a of the fine aperture is 100nm is illustrated in Figure 2B. The intensity distribution diagram of Figure 2B illustrates that the electric field intensity is greater as the light is brighter. Particularly, the strong photoelectric field Ex of the x direction components parallel to the surface of the metal film at the edge portions of the aperture resonate with surface plasmon, and the photoelectric field is amplified thereat.

Figure 2C is a diagram that schematically illustrates the amplified intensity of the photoelectric field at the surface of the finely apertured thin metal film when the excitation light beam is being irradiated in the apparatus of the present invention. Figure 2A and Figure 2B schematically illustrate photoelectric fields generated by evanescent light from the fine apertures, but Figure 2C illustrates photoelectric fields which are amplified by the evanescent light resonating with plasmon of the thin metal film.

As illustrated in Figure 2C, the intensity of the photoelectric field is high in the vicinities of the fine apertures 12a due to the enhancing effect of surface plasmon. The boundaries between the apertures 12a and the thin metal film are regions in which the intensity of photoelectric fields change drastically. As is well known, the force F generated by "optical tweezers" is represented by the following formula (wherein $\alpha$: polarizability):

$$F = \frac{1}{2}\alpha\nabla E^2$$

As can be understood from this formula, the "optical tweezers" effect is generated at portions where the intensity of the photoelectric field changes drastically, and it is considered that non specific adsorption of the fluorescent particles occur in the vicinities of the apertures, as illustrated in Figure 2C.

It is considered that fluorescent particles having a certain particle size or greater are trapped at the apertures at portions where the intensity of the photoelectric field changes drastically by the optical tweezers effect. Therefore, it is considered that it is desirable for the particle size to be small to a degree such that the effect of disturbance by Brownian motion of the fluorescent particles is greater than the capturing force of the force F of the optical tweezers. It is known that particle sizes that can be captured by optical tweezers are within a range

from less than 1μm to approximately 1mm in the case that the material of the fluorescent particles is a dielectric (having a refractive index of approximately 1.5).

Based on the above knowledge, it is preferable for the particle size $\varphi$ of the fluorescent particles to be less than or equal to 200nm. It is considered that the Brownian motion of the fluorescent particles will substantially preclude the optical tweezers effect from being imparted, if the particle size is 200nm or less. Note that because a particle size sufficient to prevent the influence of metal quenching of the fluorescent pigment within the fluorescent particles from being imparted, it is preferable for the particle size to be 20nm or greater, and more preferably 50nm or greater. In the case that the particle size of approximately 50nm, there is also an advantage that commercially available fluorescent particles can be employed.

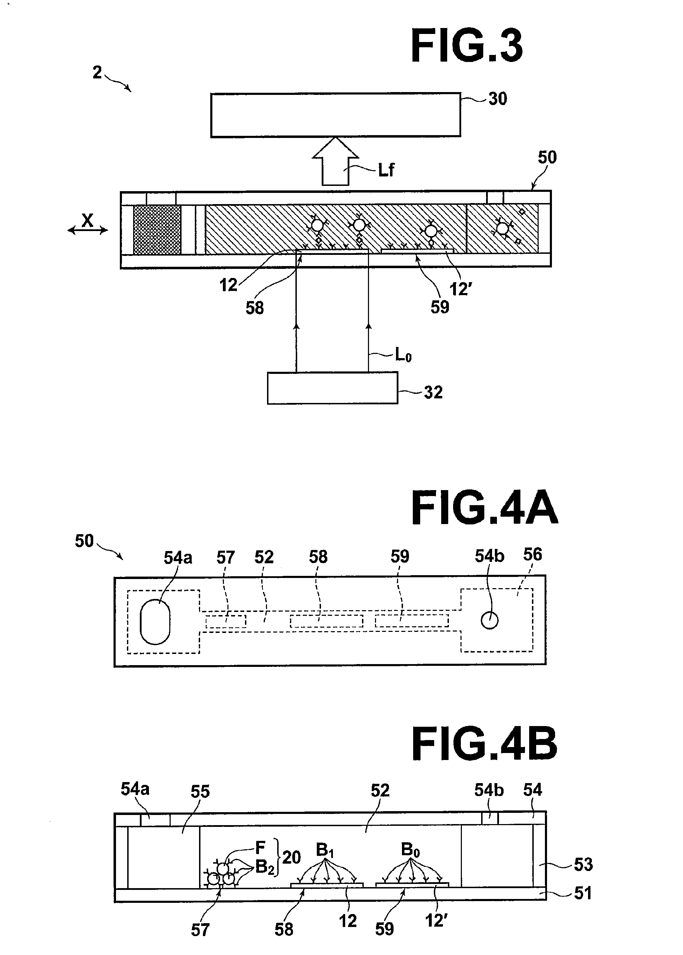

A fluorescent detecting apparatus 2 according to a second embodiment of the present invention will be described with reference to Figure 3 through Figure 5. Here, components which are the same as those of the first embodiment are denoted with the same reference numerals.

The fluorescence detecting apparatus 2 illustrated in Figure 3 is equipped with: a sample cell 50 according to an embodiment of the present invention; a light source for irradiating an excitation light beam $L_0$ onto predetermined regions of the sample cell 50; and a photodetector 30 for detecting fluorescence $L_f$.

Figure 4A is a plan view that illustrates the construction of a sample cell 50, and Figure 4B is a cross sectional side view of the sample cell 50.

The sample cell 50 is equipped with: a substrate 51; a spacer 53 for holding a liquid sample S on the base 51 and which forms a flow channel 52 for the liquid sample S; and an upper plate 54, which is a glass plate having an injection opening 54a through which the liquid sample S is injected, and an air aperture 54b through which the liquid sample S is expelled after flowing through the channel 52. A membrane filter 55 is provided at a position between the injection opening 54a and the channel 52, and a waste liquid repository is formed at the downstream portion of the channel 52 where the channel 52 connects with the air aperture 54b.

Further, finely apertured thin metal films 12 and 12' having fine apertures therein are sequentially provided at regions of the base 51 of the sample cell 50 from the upstream side of the flow channel. A sensor portion 58, on which primary antibodies $B_1$ that bind specifically with antigens A which are a detection target substance are immobilized, is provided on the finely apertured thin metal film 12. In addition, a reference portion 59, on which primary antibodies $B_0$ that do not bind specifically with the antigens which are the detection target substance but bind specifically with secondary antibodies $B_2$ to be described later are immobilized, is provided on the finely apertured thin metal film 12' at the downstream side of the sensor portion 58.

The finely apertured thin metal films 12 and 12' are the same as the finely apertured thin metal film 12 of the sample cell 10 of the fluorescence detecting apparatus 1 according to the first embodiment. Note that the fine apertures are omitted in Figures 3 through 5.

A labeling binding substance adsorption area 57, at which fluorescent particles F having surfaces that are modified with the secondary antibodies $B_2$ (second binding substance) that bind specifically with the antigens which are the detection target substance are physically adsorbed, is provided on the substrate 51 of the sample cell 50 on the upstream side of the sensor portion 58.

Note that Figure 3 illustrates the sample cell 50 in a state after the sample liquid has been injected, the antibodies have bound with the labeling secondary antibodies, and the sample liquid has flowed downstream. Therefore, the labeling binding substance adsorption area 57 is no longer present in Figure 3.

In the present embodiment, a case is described in which the sensor portion and the reference portion are both provided on the substrate 51. Alternatively, only the sensor portion may be provided. Note that by providing the reference portion, detection of fluorescence from the reference portion enables detection of the amount and activity of the labeling secondary antibodies which have flowed through the channel, which are factors of variation related to reactions, and factors of variation due to the degree of surface plasmon enhancement, such as the light source 32, the finely apertured thin films 12 and 12', and the liquid sample, can be detected and utilized for calibration.

The sample cell 50 is configured to be movable in the X direction relative to the excitation light source 32 and the photodetector 30. The fluorescence detecting apparatus 2 is configured such that after detecting fluorescence from the sensor portion 58, the reference portion 59 is moved to an optical signal detecting position to perform optical signal detection from the reference portion.

The principles of the fluorescence detecting method that employs the fluorescence detecting apparatus 2 described above are the same as those of the first embodiment. The present embodiment employs the same fluorescent particles as those of the first embodiment as fluorescent labels. Therefore the same advantageous effects as those obtained by the first embodiment can be obtained, and extremely accurate measurements can be performed by a simple method.

Further, sensing that utilizes the sample cell of the present embodiment will be described.

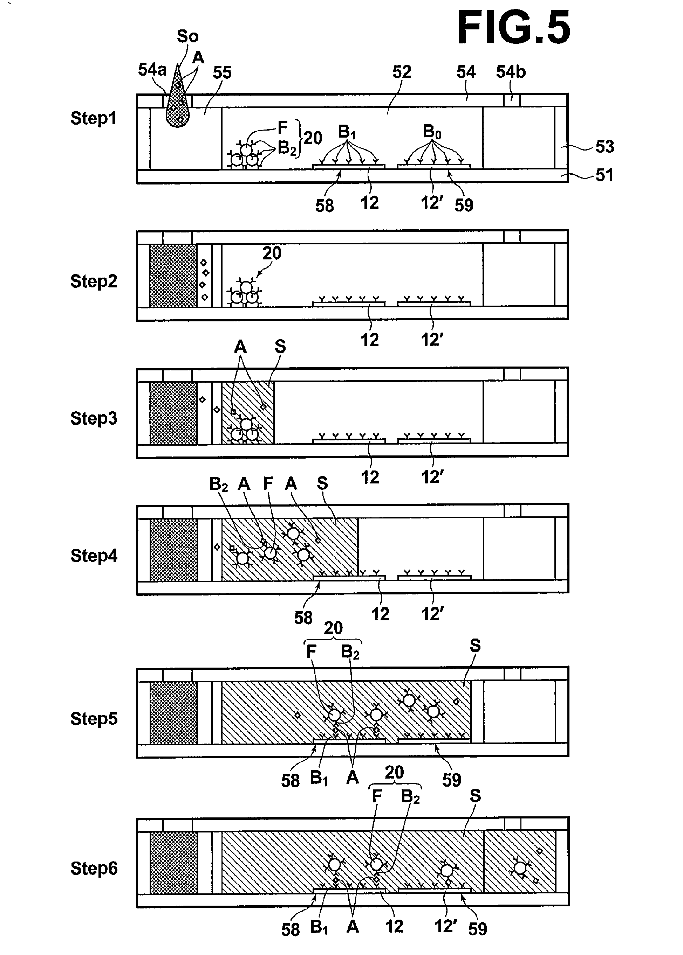

The procedures by which an assay is performed to detect whether an antigen to be detected is included in blood (whole blood) which is injected into the injection opening of the sample cell 50 will be described with reference to Figure 5.

Step 1: The blood So (whole blood), which is the target of inspection, is injected through the injection opening 54a. Here, a case will be described in which the blood So includes the antigen A to be detected. In Figure 5, the blood So is represented by the cross hatched regions.

Step 2: The blood So is filtered by the membrane filter 55, and large molecules, such as red blood cells and white blood cells, are separated as residue.

Step 3: The blood S, from which blood cells have been filtered out by the membrane filter 55 (plasma) leaks out into the channel 52 by capillary action. Alternatively, in order to expedite reactions and to shorten detection time, a pump may be connected to the air aperture 54b, and the plasma S may be caused to flow by suctioning and extruding operations of the pump. In Figure 5, the plasma S is represented by the hatched regions.

Step 4: the plasma S, which has leaked into the channel 52 and the labeling secondary antibodies $B_2$, which are provided as surface modifications on the fluorescent particles F, mix, and the antigens A within the plasma S bind with the labeling secondary antibodies $B_2$.

Step 5: the plasma S gradually flows along the channel 52 toward the air aperture 54b, and the antigens A, which are bound to the labeling secondary antibodies $B_2$, bind with the primary antibodies $B_1$, which are immobilized onto the sensor portion 58. So called sandwich configurations, in which the antigens A are sandwiched between the primary antibodies $B_1$ and the labeling secondary antibodies $B_2$, are formed.

Step 6: A portion of the labeling secondary antibodies $B_2$ that did not bind with the antigens A bind with the primary antibodies $B_0$ which are immobilized on the reference portion 59. Further, even in the case that the fluorescent particles F having the secondary antibodies $B_2$ as surface modifications, which did not bind with the antigens A or the primary antibodies $B_0$ remain on the sensor portion, the following plasma S functions as a cleansing agent that washes the fluorescent particles F, which are floating or non specifically adsorbed onto the plate, away.

In this manner, the blood is injected through the injection opening 54a, and step 1 through step 6 are performed to form the sandwich configurations, in which the antigens A are sandwiched between the primary antibodies $B_1$ and the labeling secondary antibodies $B_2$, on the sensor portion 58. Thereafter, the intensity of fluorescence from the sensor portion 58 is detected, to detect the presence and/or the concentration of the antigens. Next, the sample cell 50 is moved in the X direction so as to enable detection of fluorescent signals at the reference portion 59, and fluorescent signals are detected at the reference portion 59. The fluorescent signals obtained at the reference portion 59, at which the primary antibodies $B_0$ that bind with the secondary antibodies $B_2$ are immobilized, are considered to be fluorescent signals that reflect reaction conditions such as the amount of the secondary antibodies $B_2$ which has flowed through the channel and the activity thereof. Therefore, if the fluorescent signals obtained at the reference portion 59 are used as a reference to correct the fluorescent signals obtained at the sensor portion 58, more accurate detection results can be obtained. Note that detection of fluorescence may be that which measures temporal changes in the intensity of fluorescence from the time that a sample liquid is injected until a predetermined amount of time elapses. In this case, fluorescence detection may be performed at the sensor portion 58 and the reference 59 at predetermined temporal intervals, to measure temporal changes in the intensity of fluorescence at both portions.

The fluorescence detecting apparatuses and the fluorescence detecting methods of the embodiments described above are those that detect fluorescence by a detection method referred to as the sandwich method. However, a fluorescence detecting apparatus that detect fluorescence by the so called competition method can be obtained, by mixing a labeling binding substance, in which fluorescent particles F are modified with a third binding substance that bind specifically with the first binding substance (primary antibodies $B_1$), with a sample liquid S, instead of the second binding substance (secondary antibodies $B_2$) that bind specifically with the antigens in the configuration illustrated in Figure 1. That is, in this case, the third binding substance and antigens A compete when binding with the primary antibodies $B_1$. Therefore, the number of fluorescent particles that bind with the sensor portion becomes smaller as the amount of the antigens A is greater, and the amount of fluorescence $L_f$ which is detected decreases. In this case as well, the antigens A can be quantitatively analyzed based on the detected amount of fluorescence.

**Claims**

1. A fluorescence detecting apparatus (1, 2), comprising:

   a light source (32) for emitting excitation light;
   a sample cell (10, 50) equipped with a substrate (11, 51) arranged at a position onto which the excitation light is irradiated and formed by a material that transmits the excitation light that enters through a light incident surface, a finely apertured thin metal film (12) formed on a surface of the substrate other than the light incident surface and having fine apertures (12a) with diameters less than or equal to the wavelength of the excitation light, and a sample holding portion (13, 53) for holding a sample liquid that includes fluorescent labels such that the sample liquid contacts the finely apertured thin metal film (12); and
   a photodetector (30) for detecting fluorescence emitted by the fluorescent labels, which are excited by near field light generated at the fine apertures (12q) when the excitation light passes through the substrate (11, 51) from the incident surface and enters the finely apertured metal film (12) and also excited by surface plasmon resonance induced on the finely apertured thin metal film (12) by the near field light; **characterized by**:

the fluorescent labels being fluorescent particles (F) having fluorescent pigment molecules (15) which are enveloped in a light transmitting material (16) that transmits both the excitation light and the fluorescence.

2. A fluorescence detecting apparatus as defined in Claim 1, **characterized by**:

the particle size φ of the fluorescent particles (F) being less than or equal to 200nm.

3. A sample cell (50) to be employed in the fluorescence detecting apparatus as defined in either one of Claim 1 and Claim 2, **characterized by**:

the substrate (51) and the sample holding portion (53) constituting a flow channel (52) through which the sample liquid flows;
a sensor portion (42), at which a first binding substance that specifically binds with a detection target substance is immobilized, being provided on the finely apertured thin metal film (12);
a labeling binding substance adding portion (57), at which one of a second binding substance that specifically binds with the detection target substance and is labeled with fluorescent labels and a third binding substance that specifically binds with the first binding substance in competition with the detection target substance and is labeled with fluorescent labels are added, being provided in the flow channel (52) upstream of the sensor portion (42); and
the fluorescent labels being fluorescent particles (F) having fluorescent pigment molecules (15) which are enveloped in a light transmitting material (16) that transmits both the excitation light and the fluorescence.

4. A fluorescence detecting method, comprising:

employing a sample cell (10, 50) equipped with a substrate (11, 51), a finely apertured thin metal film (12) having fine apertures (12a) formed on a surface of the substrate (11, 51), and a sample holding portion (13, 53) for holding a sample liquid that includes fluorescent labels such that the sample liquid contacts the finely apertured thin metal film (12);
causing a sample liquid that includes labeled binding substance (20) labeled with fluorescent labels to contact the finely apertured thin metal film (12) of the sample cell (10, 50);
causing excitation light having a wavelength greater than the diameter of the fine apertures (12a) to enter an incident surface of the substrate (11, 51) other than the surface on which the finely apertured thin metal film is formed; and detecting fluorescence emitted by the fluorescent labels, which are excited by near field light generated at the fine apertures (12a) also excited by surface plasmon resonance induced on the finely apertured thin metal film (12) by the near field light; **characterized by**:

the fluorescent labels being fluorescent particles (F) having fluorescent pigment molecules (15) which are enveloped in a light transmitting material (16) that transmits both the excitation light and the fluorescence.

# FIG.1

FIG.2A

FIG.2B

$|Ex|^2$

FIG.2C

# FIG.3

# FIG.4A

# FIG.4B

# FIG.5

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6194223 B
- JP 2010019088 A
- JP 2008051512 A

- US 20090101836 A